# DEMANDE DE BREVET EUROPEEN

(11) **EP 4 734 406 A1**
(43) Date de publication de la demande: **29.04.2026**
(21) Numéro de dépôt: 25210327.0
(22) Date de dépôt: 22.10.2025
(51) Int. Cl.: H04B 17/309, H04B 17/391, H04W 16/18, H04W 16/22, H04B 17/20, G06N 3/0464, G06N 3/045, G06N 3/048, G06N 3/08, G06N 3/084

(54) **PROCÉDÉ DE MISE EN OEUVRE PAR ORDINATEUR POUR DÉTERMINER L 'ATTÉNUATION DE PROPAGATION D'UN SIGNAL RADIOFRÉQUENCE, PROGRAMME D 'ORDINATEUR ET DISPOSITIF**

(30) Priorité: 23.10.2024 FR 2411566
(71) Demandeur: THALES, 92190 Meudon (FR)
(72) Inventeur: MARTIN, Béatrice, 92622 Gennevilliers Cedex (FR); LADJELATE, Bilal, 91767 Palaiseau (FR)
(74) Mandataire: Lavoix

(57) **Abrégé**

La présente invention concerne procédé pour déterminer l'atténuation de propagation d'un signal radiofréquence et comprenant les étapes suivantes : charger un modèle numérique de terrain, le modèle numérique de terrain représentant la topographie d'une zone terrestre ; charger un modèle numérique de sursol de la zone terrestre ; générer au moins un rayon entre au moins un premier point sur la zone terrestre et au moins un deuxième point, le premier point étant la position d'un transmetteur du signal radiofréquence et le deuxième point étant la position d'un récepteur du signal radiofréquence ; utiliser chaque rayon pour générer respectivement un premier vecteur de relief à partir du modèle numérique de terrain ; utiliser chaque rayon pour générer respectivement un deuxième vecteur définissant la caractéristique du sursol à partir du modèle numérique de sursol ; et calculer avec un algorithme d'intelligence artificielle entrainé l'atténuation de propagation d'un signale radiofréquence .

## Description

La présente invention concerne un procédé de mis en œuvre par ordinateur pour déterminer l'atténuation de propagation d'un signal radiofréquence.

L'invention concerne également un programme d'ordinateur comportant des instructions logicielles qui, lorsqu'elles sont exécutées par un ordinateur, mettent en œuvre un tel procédé.

L'invention concerne aussi un de traitement de données comprenant des moyens de mettre en œuvre un tel procédé.

On connait des modèles de propagation, certains recommandés par l'ITU-R. Ce sont des modèles statistiques. Ils comportent beaucoup de paramètres d'entrées qui peuvent être difficiles à positionner. Les modèles référencés de l'ITU, du 3GPP et de la littérature ne s'appliquent qu'à des cas de déploiement précis.

WO2023214176A1 concerne un procédé de calcul de perte de trajet de propagation radio prenant complètement en compte des facteurs environnementaux, y compris les bâtiments, routes, feuillages, surfaces d'eau, etc.

CN110971323B concerne un système de détermination de l'atténuation d'un signal.

Une partie de l'état de l'art antérieur utilise des approches systématiques (ray tracing, résolution d'équation aux dérivées partielles) qui sont extrêmement coûteuses en termes de ressources informatiques et ne représentent pas la réalité du terrain car elles n'intègrent pas tous les phénomènes de propagation.

Les approches à base d'intelligence artificielle proposent des solutions à base de perceptron (empilement de couches linéaires).

Le but de l'invention est alors de proposer un procédé permettant de déterminer l'atténuation de propagation d'un signal radiofréquence avec une plus grande qualité et à améliorer les prédictions de couverture.

A cet effet, l'invention a pour objet un procédé mis en œuvre par ordinateur pour déterminer l'atténuation de propagation d'un signal radiofréquence et comprenant les étapes suivantes :
charger un modèle numérique de terrain, le modèle numérique de terrain représentant la topographie d'une zone terrestre ;
charger un modèle numérique de sursol de la zone terrestre ;
générer au moins un rayon entre au moins un premier point sur la zone terrestre et au moins un deuxième point sur la zone terrestre, le premier point étant la position d'un transmetteur du signal radiofréquence et le deuxième point étant la position d'un récepteur du signal radiofréquence ;
utiliser chaque rayon pour générer respectivement un premier vecteur de relief définissant l'altitude du sol entre le premier point et le deuxième point à partir du modèle numérique de terrain ;
utiliser chaque rayon pour générer respectivement un deuxième vecteur définissant la caractéristique du sursol entre le premier point et le deuxième point à partir du modèle numérique de sursol ; et
calculer avec un algorithme d'intelligence artificielle entrainé l'atténuation de propagation d'un signale radiofréquence entre le ou les premiers points et le ou les deuxièmes point(s), les données d'entrée de l'algorithme d'intelligence artificielle sont le ou les premiers vecteurs et le ou les deuxièmes vecteurs, et le ou les données de sortie de l'algorithme d'intelligence artificielle est l'atténuation de propagation du signal radiofréquence au(x) deuxième(s) point(s).
Suivant d'autres aspects avantageux de l'invention, le procédé comprend une ou plusieurs des caractéristiques suivantes, prises isolément ou suivant toutes les combinaisons techniquement possibles :
- chaque rayon est une ligne de visée entre le premier point et le deuxième point ;
- chaque rayon a une largeur de bande du terrain ;
- la largeur de bande sur le terrain est une largeur entre 5m et 50m ;
- la largeur de bande sur le terrain est supérieure à 5m, en particulier supérieure à 10m, par exemple supérieure à 20m ;
- la largeur de bande sur le terrain est inférieure à 200m, en particulier inférieure à 100m, par exemple inférieure à 50m ;
- le premier point et/ou le deuxième point sont au sol ou en dessus du sol ;
- le premier point définit un émetteur radiofréquence et/ou le deuxième point définit un récepteur radiofréquence ; et/ou
- la caractéristique du sursol définie est codée.

L'invention concerne également un procédé de génération d'une carte de couverture comprenant le procédé tel que défini ci-dessus.

L'invention concerne également un programme d'ordinateur comportant des instructions logicielles qui, lorsqu'elles sont exécutées par un ordinateur, mettent en œuvre un procédé tel que défini ci-dessus.

L'invention concerne également un dispositif de traitement de données comprenant des moyens de mise en œuvre d'un procédé tel que défini ci-dessus.

L'invention apparaîtra plus clairement à la lecture de la description qui va suivre, donnée uniquement à titre d'exemple non limitatif, et faite en référence aux dessins dans lesquels :
[Fig. 1] la figure 1 montre schématiquement un système avec un émetteur, un récepteur et un dispositif d'apprentissage automatique ;
[Fig. 2] la figure 2 montre un diagramme d'un apprentissage automatique ;
[Fig. 3] la figure 3 montre un diagramme détaillé de l'apprentissage automatique utilisant un réseau de neurones convolutifs ;
[Fig. 4] la figure 4 montre un diagramme détaillé de l'apprentissage automatique utilisant un réseau de neurones seq2seq ;
[Fig. 5] la figure 5 montre un diagramme d'un mode de réalisation d'un procédé pour déterminer l'atténuation de propagation ;
[Fig. 6] la figure 6 montre un diagramme de préparation des données pour l'algorithme d'intelligence artificielle ; et
[Fig. 7] la figure 7 montre l'utilisation des vecteurs combinés pour le calcul de l'atténuation de propagation avec l'algorithme d'intelligence artificielle.

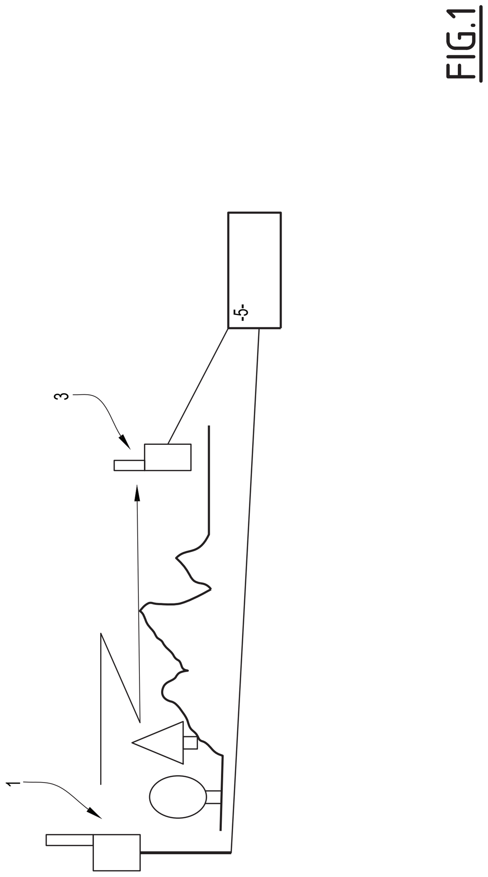

La figure 1 montre schématiquement un système avec un transmetteur 1, un récepteur 3 et un dispositif d'apprentissage automatique 5. Entre transmetteur 1 et le récepteur 3 le relief du sol présente différents niveaux et différentes caractéristiques du sursol. Les caractéristiques du sursol sont par exemple, une surface d'eau (par exemple en cas d'un fleuve ou d'un lac), un arbre, une forêt, un ou plusieurs bâtiments, etc. Lorsque des campagnes de mesures sont effectuées, au moins une position d'un transmetteur 1, au moins une position d'un récepteur 3, et l'atténuation de propagation d'un signal radiofréquence entre le transmetteur 1 et le récepteur 3 sont enregistrés et injectés dans le dispositif d'apprentissage automatique 5, par exemple par une connexion informatique. Aussi d'autres caractéristiques peuvent être enregistrées et injectées dans le dispositif d'apprentissage automatique 5, par exemple la fréquence, le gain de l'antenne du transmetteur et/ou du récepteur 3, la puissance du transmetteur.

Le transmetteur 1 et/ou le récepteur 3 peuvent être sur le sol ou dans l'air. La position du transmetteur 1 et la position du récepteur 3 contiennent la position géographique et, en particulier, une altitude. Par exemple, la position du transmetteur 1 et la position du récepteur 3 contiennent des coordonnées géographiques, par exemple obtenu par un système de localisation par satellite (GNSS), notamment GPS (Global Positioning System), Galileo, Glonass, etc.

Par exemple le signal radiofréquence est entre 300 MHz et 5 000_ MHz, en particulier entre 4 000 MHz et 4 500 MHz.

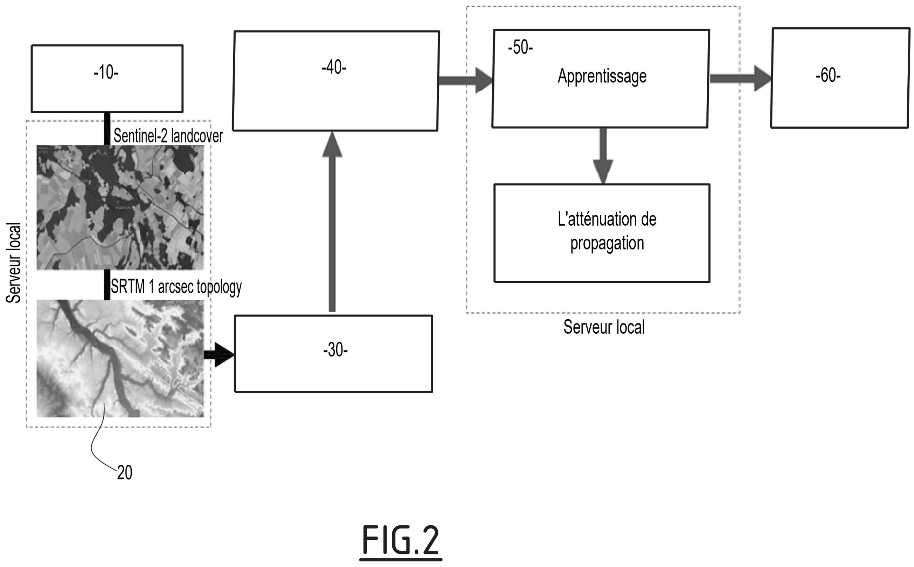

La figure 2 montre un diagramme d'un apprentissage automatique, qui est au moins partiellement mis en œuvre par le dispositif d'apprentissage automatique 3, qui est par exemple le serveur local de la figure 2.

A l'étape 10 les données mesurées, notamment une pluralité de jeu de données sont obtenus par le dispositif d'apprentissage automatique 3. Par exemple le jeu de données est un quadruplet comprenant la position du transmetteur 1, la position du récepteur 3, la fréquence et l'atténuation de propagation d'un signal radiofréquence. Chaque jeu de données peut comprendre une ou plusieurs données supplémentaires comme la distance entre la position et l'altitude du transmetteur 1 et la position et l'altitude du récepteur 3, le gain de l'antenne du transmetteur, le gain de l'antenne du récepteur 3 et/ou la puissance du transmetteur.

Par exemple, lors d'une campagne de mesure le transmetteur 1 et/ou le récepteur 3 peuvent changer leur position et/ou altitude.

A l'étape 20 le dispositif d'apprentissage automatique 3 est propre à charger un modèle numérique de terrain, le modèle numérique de terrain représentant la topographie d'une zone terrestre. Chaque jeu de données comporte la position du transmetteur 1 et la position du récepteur 3 dans cette zone.

Un modèle numérique de terrain est une représentation de la topographie ou de l'altitude d'une zone terrestre qui est lisible par un calculateur numérique ou un ordinateur.

A l'étape 20 le dispositif d'apprentissage automatique 3 est propre à charger un modèle numérique de sursol de la zone terrestre. Le modèle numérique du sursol comprend une ou plusieurs caractéristiques du sursol pour chaque point de la zone terrestre.

Dans la suite, à l'étape 30, pour chaque jeu de données, le procédé trace un rayon entre la position du récepteur et la position du transmetteur 1.

Dans un mode de réalisation, le rayon a une largeur de bande du terrain, le premier vecteur et/ou le deuxième vecteur prend la largeur de bande étant en particulier entre 5m et 50m, par exemple entre 10m et 20m. Dans d'autres exemples la largeur de bande sur le terrain est supérieure à 5m, en particulier supérieure à 10m, par exemple supérieure à 20m et/ou inférieure à 200m, en particulier inférieure à 100m, par exemple inférieure à 50m. En d'autre mots, une tranche entre la première position du transmetteur 1 et la position du récepteur est prise.

A l'étape 40, au moins un premier vecteur de relief définissant l'altitude du sol entre le premier point (position du transmetteur 1) et le deuxième point (position du récepteur 3) est défini. Par exemple, le procédé extrait la liste des altitudes entre le premier point et le deuxième point à partir du modèle numérique de terrain, par exemple avec la méthode de Bessenham.

Egalement dans cette étape, un deuxième vecteur définissant la caractéristique du sursol entre le premier point et le deuxième point est défini. Par exemple, dans ce vecteur un numéro est attribué à chaque caractéristique du sursol.

Le premier vecteur et/ou le deuxième vecteur prennent en compte la largeur de bande du rayon sur le terrain. Par exemple pour augmenter la largeur, la position du transmetteur et la position du récepteur sont incrémentées en largeur. En d'autres termes un ensemble de positions sur une largeur de terrain entre le transmetteur et le récepteur sont prises.

A l'étape 50 un algorithme d'intelligence artificielle est entrainé en utilisant en particulier le premier vecteur et le deuxième vecteur en tant que données d'entrée et l'atténuation de propagation d'un signal radiofréquence en tant que valeur de sortie.

Selon un mode de réalisation, les données d'entrée sont ensuite concaténées dans des tableaux 2D de taille B, K, X, X avec B la taille de lot (c'est-à-dire le nombre de mesures effectuées), avec K le nombre de canaux possibles (dans le cas deux, donc un premier canal avec les premiers vecteurs définissant la topologie ou l'ensemble des altitudes du sol entre le premier point (position du transmetteur 1) et le deuxième point (position du récepteur 3) et un deuxième canal avec les deuxièmes vecteurs définissants la caractéristique du sursol) et X la taille des vecteurs extraits des cartes.

Dans des exemples, il est possible de concaténer aussi une ou plusieurs des données supplémentaires par exemple la fréquence et/ou la distance entre la position de transmetteur et la position du récepteur 3, par exemple sous la forme d'un embedding de taille X. Le tableau d'entrée peut ainsi faire une taille B, 4, X, X dans le cas de deux données supplémentaires.

A la fin de l'apprentissage ou de l'entrainement de l'algorithme d'intelligence artificielle un modèle exportable 60 est obtenu.

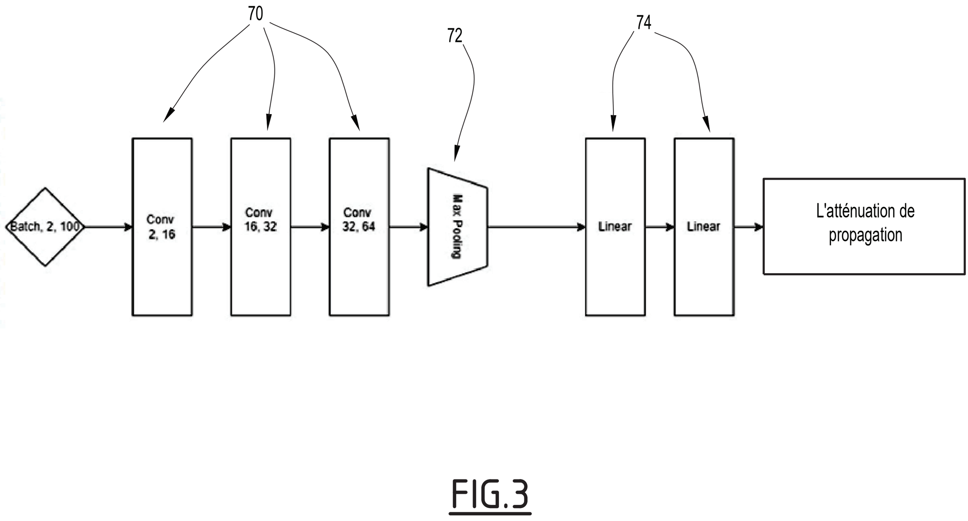

La figure 3 montre un diagramme détaillé de l'apprentissage automatique en utilisant un réseau de neurones convolutifs. En d'autre termes, l'algorithme d'intelligence artificielle est un réseau de neurones convolutifs. Cette algorithme d'intelligence artificielle est en particulier utilisé pour des calculs de l'atténuation de propagation entre deux points, par exemple entre le transmetteur 1 et le récepteur 3, et pour calculer une carte de couverture, en particulier autour d'un transmetteur 1.

Dans un mode de réalisation, l'algorithme d'intelligence artificielle comprend une pluralité de couches de convolution 70 visant à créer un espace latent contenant des caractéristiques importantes. Selon un exemple, ces couches peuvent-êtres des couches de convolution, des LSTM (Long Short-Term memory) ou des couches GRU (Gated Recurrent Unit). Ces couches concaténées projettent la donnée de taille B, 4, X, X vers un espace de taille fixe. Sur la Figure 3 dans chaque couche le premier chiffre indique le nombre d'entrées et le deuxième chiffre le nombre de sorties.

A la suite, des couches de convolutions il y a une couche de max pooling 72 et une pluralité de couches linéaires 74 de réseau de neurones.

Généralement un réseau de neurones comporte une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

À chaque neurone est également associée une opération, c'est-à-dire un type de traitement, à effectuer par ledit neurone au sein de la couche de traitement correspondante.

Chaque couche est reliée aux autres couches par une pluralité de synapses. Un poids synaptique est associé à chaque synapse, et chaque synapse forme une liaison entre deux neurones. C'est souvent un nombre réel, qui prend des valeurs positives comme négatives. Dans certains cas, le poids synaptique est un nombre complexe.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside sont des exemples de fonction d'activation.

En complément facultatif, chaque neurone est également apte à appliquer, en outre, un facteur multiplicatif, également appelé biais, à la sortie de la fonction d'activation, et la valeur délivrée en sortie dudit neurone est alors le produit de la valeur de biais et de la valeur issue de la fonction d'activation.

Un réseau de neurones à convolution est aussi parfois dénommé réseau de neurones convolutif ou par le sigle CNN qui renvoie à la dénomination anglaise de *« Convolutional Neural Networks ».*

Dans un réseau de neurones à convolution, chaque neurone d'une même couche présente exactement le même schéma de connexion que ses neurones voisins, mais à différentes positions d'entrée. Le motif de connexion est appelé noyau de convolution ou, plus souvent, « *kernel* » en référence à la dénomination anglaise correspondante.

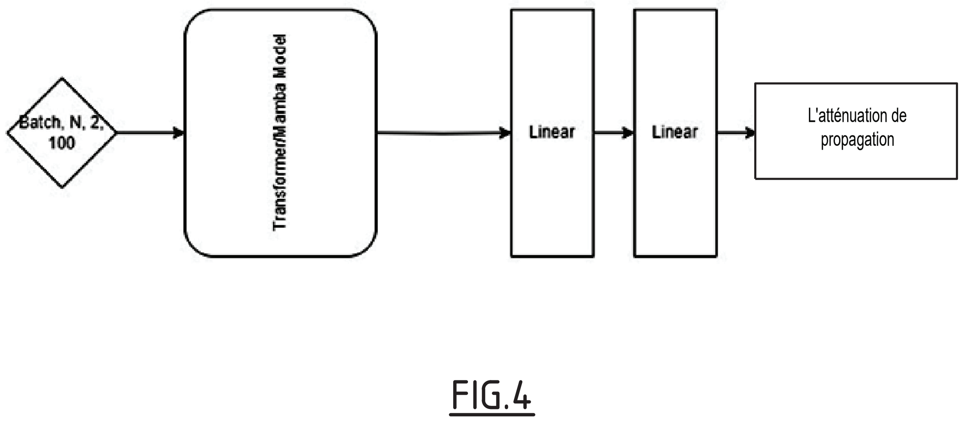

La figure 4 montre un diagramme détaillé de l'apprentissage automatique en utilisant un réseau de neurones seq2seq. Cet algorithme d'intelligence artificielle est en particulier utilisé pour des calculs de l'atténuation de propagation sur une trajectoire prédéfinie, par exemple sur une route ou une voie ferroviaire, en particulier lorsque le récepteur 3 et ou le transmetteur 1 suit la trajectoire prédéfinie.

Cet algorithme d'intelligence artificielle utilise une logique de séquence dans laquelle en tant que données d'entrée des vecteurs de taille B, T, K, X, X sont utilisées avec K=4, X la taille des premiers ou deuxièmes vecteurs et T la dimension suivant la séquence des positions du récepteur 3 (dans le cas où le transmetteur est fixe). Des séquences de couples de positions du transmetteur 1 et du récepteur 3 sont utilisées lorsque le transmetteur 1 est mobile.

Par exemple ce réseau de neurones seq2seq comprend des architectures de type décodeur-encodeur comme les architectures Transformers ou Mamba 80 pour former un espace latent, et nous employons ensuite ces couches linéaire 82 pour prédire la séquence de l'atténuation de propagation pour la suite de la trajectoire.

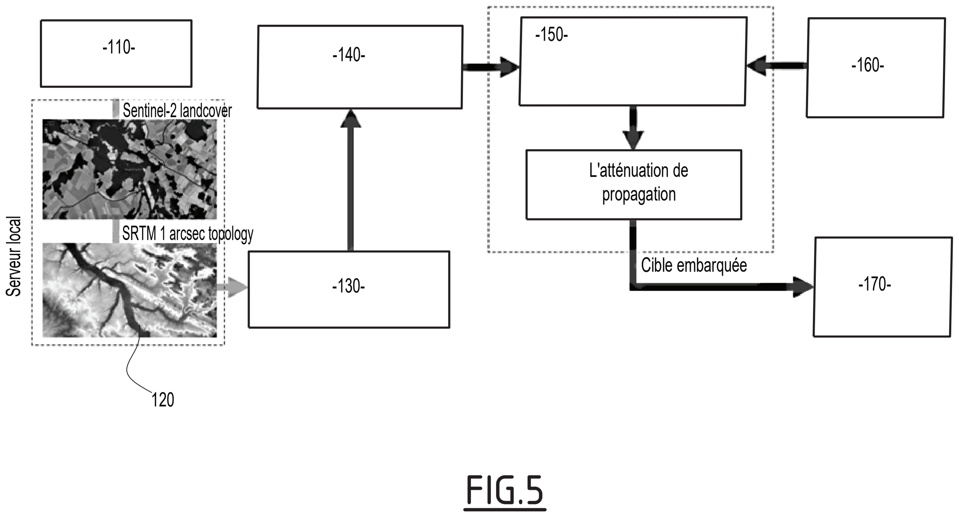

La figure 5 montre un diagramme d'un mode de réalisation d'un procédé pour déterminer l'atténuation de propagation. Dans ce mode de réalisation une carte de couverture autour d'un transmetteur 1 est gérée.

A l'étape 110 une position d'un transmetteur 1 est obtenue.

Dans l'étape 120 un modèle numérique de terrain, le modèle numérique de terrain représentant la topographie d'une zone terrestre et chargé et un modèle numérique de sursol de la zone terrestre est chargé.

Dans la suite, à l'étape 130 une pluralité de rayons entre les possibles positions du récepteur 3 et la position du transmetteur 1 est générée. Les rayons sont utilisés pour extraire un vecteur des différentes altitudes du terrain du modèle numérique de terrain, l'extraction de ce vecteur est par exemple définie par la méthode de Bessenham.

A l'étape 140, pour chaque rayon au moins un premier vecteur de relief définissant les altitudes du sol entre le premier point et le deuxième point est généré à partir du modèle numérique de terrain. Egalement dans cette étape, pour chaque rayon un deuxième vecteur définissant la caractéristique du sursol entre le premier point et le deuxième point est généré du modèle numérique de sursol. Par exemple, dans ce vecteur un numéro est attribué à chaque caractéristique du sursol.

L'algorithme d'intelligence artificielle 150 entrainé calcule, en particulier en chargeant un modèle entraîné 160 (correspondant au modèle exportable 60), pour calculer pour chaque rayon une valeur de l'atténuation de propagation.

A l'étape 170 une carte de couverture est généré. Cette carte de couverture indique pour chaque position l'atténuation de propagation. De cette manière l'atténuation de propagation est calculée pour toutes les positions possibles dans une aire désirée. Par exemple, les données de l'atténuation de propagation calculées sont visualisées sur une carte.

Dans un autre mode de réalisation le procédé calcule l'atténuation de propagation seulement entre deux points, notamment entre le transmetteur 1 et le récepteur 3.

Selon un autre mode de réalisation la prédiction de l'atténuation de propagation est calculée pour un trajectoire, par exemple la trajectoire d'un transmetteur et/ou la trajectoire d'un récepteur.

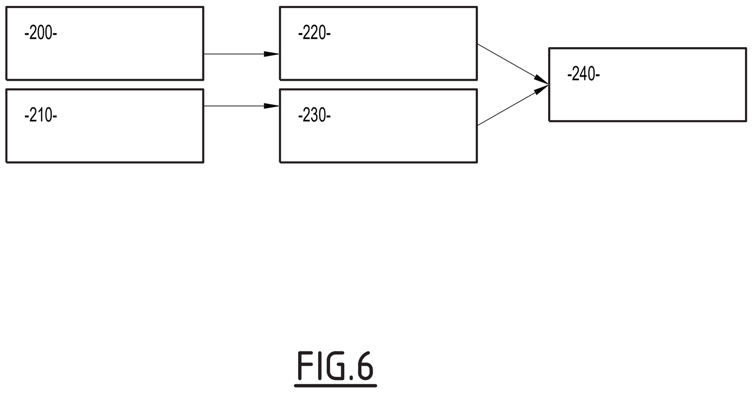

La figure 6 montre un diagramme de préparation des données pour l'apprentissage automatique avec l'algorithme d'intelligence artificielle et pour le calcul avec l'algorithme d'intelligence artificielle de l'atténuation de propagation. Cette préparation correspond par exemple aux étapes 40 et 140.

A l'étape 200 un premier vecteur de relief définissant l'altitude du sol entre le premier point et le deuxième point est généré à partir du modèle numérique de terrain. Dans la suite, à l'étape 220, les valeurs d'altitude sont codées numériquement, si nécessaire.

A l'étape 210 un deuxième vecteur définissant la caractéristique du sursol entre le premier point et le deuxième point est généré à partir du modèle numérique de terrain. A l'étape 230, dans ce vecteur chaque caractéristique du sursol est attribuée ou codée avec un numéro.

Dans l'étape 240 les deux vecteurs sont combinés sous forme d'un embedding.

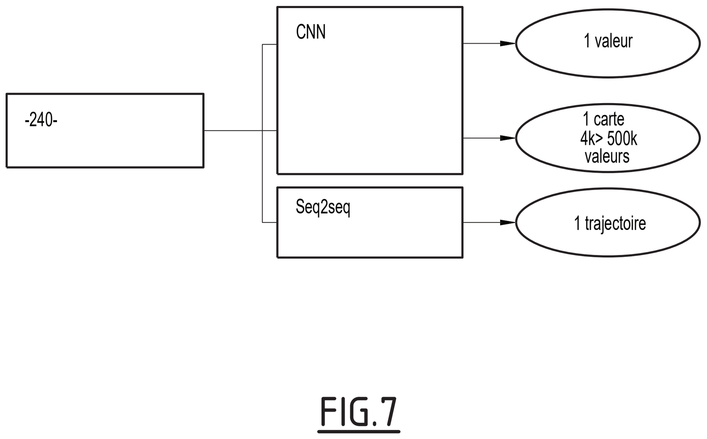

La figure 7 montre l'utilisation des vecteurs combinés pour le calcul de l'atténuation de propagation avec l'algorithme d'intelligence artificielle.

A l'étape 240 les vecteurs combinés sont utilisés en tant que données d'entrée pour l'algorithme d'intelligence artificielle. Si une seule valeur d'atténuation de propagation ou une carte d'atténuation de propagation est souhaitée, dans un mode de réalisation l'algorithme d'intelligence artificielle est un CNN ou un réseau de neurones convolutifs. Dans un mode de réalisation les valeurs numériques de l'atténuation de propagation peuvent être classifiées dans une classe, par exemple bon, moyen ou mauvais.

Si une trajectoire d'un transmetteur ou d'un récepteur est connue, l'algorithme d'intelligence artificielle est un réseau du type seq2seq.

Le dispositif de traitement de données, notamment le dispositif d'apprentissage automatique 5 est propre à mettre en œuvre un procédé pour déterminer l'atténuation de propagation d'un signal radiofréquence qui sera décrit ci-dessus.

Le dispositif est un circuit électronique conçu pour manipuler et/ou transformer des données représentées par des quantités électroniques ou physiques dans des registres du calculateur et/ou des mémoires en d'autres données similaires correspondant à des données physiques dans les mémoires de registres ou d'autres types de dispositifs d'affichage, de dispositifs de transmission ou de dispositifs de mémorisation.

En tant qu'exemples spécifiques, le dispositif est réalisé sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit).*

En variante, lorsque le procédé est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

## Revendications

1. Procédé mis en œuvre par ordinateur pour déterminer l'atténuation de propagation d'un signal radiofréquence et comprenant les étapes suivantes :
charger (120) un modèle numérique de terrain, le modèle numérique de terrain représentant la topographie d'une zone terrestre ;
charger (120) un modèle numérique de sursol de la zone terrestre ;
générer au moins un rayon entre au moins un premier point sur la zone terrestre et au moins un deuxième point sur la zone terrestre, le premier point étant la position d'un transmetteur (1) du signal radiofréquence et le deuxième point étant la position d'un récepteur (3) du signal radiofréquence ;
utiliser chaque rayon pour générer respectivement un premier vecteur de relief définissant l'altitude du sol entre le premier point et le deuxième point à partir du modèle numérique de terrain ;
utiliser chaque rayon pour générer respectivement un deuxième vecteur définissant la caractéristique du sursol entre le premier point et le deuxième point à partir du modèle numérique de sursol ; et
calculer avec un algorithme d'intelligence artificielle entrainé l'atténuation de propagation d'un signale radiofréquence entre le ou les premiers premier points et le ou les deuxièmes point(s), les données d'entrée de l'algorithme d'intelligence artificielle sont le ou les premiers vecteurs et le ou les deuxièmes vecteurs, et le ou les données de sortie de l'algorithme d'intelligence artificielle est l'atténuation de propagation du signal radiofréquence au(x) deuxième(s) point(s).

2. Procédé selon l'une des revendications précédentes, **caractérisé en ce que** chaque rayon est une ligne de visée entre le premier point et le deuxième point.

3. Procédé selon l'une des revendications précédentes, **caractérisé en ce que** chaque rayon a une largeur de bande du terrain.

4. Procédé selon la revendication 3, **caractérisé en ce que** la largeur de bande sur le terrain est une largeur entre 5m et 50m.

5. Procédé selon la revendication 3, **caractérisé en ce que** la largeur de bande sur le terrain est supérieure à 5m, en particulier supérieure à 10m, par exemple supérieure à 20m.

6. Procédé selon la revendication 5, **caractérisé en ce que** la largeur de bande sur le terrain est inférieure à 200m, en particulier inférieure à 100m, par exemple inférieure à 50m.

7. Procédé selon l'une des revendications précédentes, **caractérisé en ce que** le premier point et/ou le deuxième point sont au sol ou en dessus du sol.

8. Procédé selon l'une des revendications précédentes, **caractérisé en ce que** le premier point définit un émetteur radiofréquence et /ou le deuxième point définit un récepteur radiofréquence.

9. Procédé selon l'une des revendications précédentes, **caractérisé en ce que** la caractéristique du sursol définie est codée.

10. Procédé de génération d'une carte de couverture comprenant le procédé selon l'une des revendications précédentes.

11. Programme d'ordinateur comportant des instructions logicielles qui, lorsqu'elles sont exécutées par un ordinateur, mettent en œuvre un procédé selon l'une quelconque des revendications précédentes.

12. Dispositif de traitement de données comprenant des moyens de mettre en œuvre le procédé selon l'une des revendications précédentes 1 à 10.
